# EUROPÄISCHE PATENTSCHRIFT

(11) **EP 2 559 321 B1**
(45) Veröffentlichungstag und Bekanntmachung des Hinweises auf die Patenterteilung: **14.05.2014**
(21) Anmeldenummer: 11715433.6
(22) Anmeldetag: 13.04.2011
(51) Int. Cl.: H05B 6/62, A23L 3/01

(54) **VERFAHREN ZUR GLEICHMÄSSIGEN ERHITZUNG EINES DURCH EIN ROHR STRÖMENDEN FLUIDS**
PROCESS FOR THE UNIFORM HEATING OF FLUIDS FLOWING IN A TUBE
PROCEDE POUR LE CHAUFFAGE UNIFORME DE FLUIDES CIRCULANT DANS UN TUBE

(30) Priorität: 14.04.2010 DE 102010014888
(43) Veröffentlichungstag der Anmeldung: 20.02.2013
(73) Patentinhaber: Fraunhofer-Gesellschaft zur Förderung der angewandten Forschung e.V., 80686 München (DE)
(72) Erfinder: PFEIFFER, Thomas, 90762 Fürth (DE); EISNER, Peter, 85354 Freising (DE)
(74) Vertreter: Gagel, Roland
(86) Internationale Anmeldenummer: PCT/EP2011/001876
(87) Internationale Veröffentlichungsnummer: WO 2011/128090

(56) Entgegenhaltungen:
- US-A- 4 778 969
- US-A1- 2006 151 533
- US-A1- 2008 017 623

## Beschreibung

### Technisches Anwendungsgebiet

Die Erfindung betrifft ein Verfahren zur gleichmäßigen Erhitzung eines durch ein Rohr strömenden Fluids sowie eine Vorrichtung zur Durchführung des Verfahrens. Bei dem Verfahren und der Vorrichtung wird ein röhrenförmiger Hochfrequenzerhitzer eingesetzt. Der Erhitzer dient zur schnellen Erwärmung von flüssigen bzw. pastösen Produkten niedriger oder hoher Viskosität mit oder ohne Anteile an Partikeln oder Stücken mittels elektrischer Hochfrequenzfelder. Eine konkrete Anwendung ist die Pasteurisierung oder Sterilisierung von Lebensmitteln vor der Verpackung bzw. Abfüllung.

### Stand der Technik

Röhrenförmige Hochfrequenz-Erhitzer für Flüssigkeiten oder fließfähige Materialien sind bereits bekannt. Sie erwärmen Materialien mit Hilfe hochfrequenter elektrischer Felder. Die Arbeitsfrequenzen können im Bereich von 10 MHz bis 50 MHz liegen, meist werden die ISM Frequenzen (Frequencies for Industrial, Scientific, and Medical use) 6,78 MHz, 13,56 MHz, 27,12 MHz oder 40,48 MHz verwandt.

Im Folgenden werden die hochfrequenten elektrischen Felder HF-Felder genannt, die Hochfrequenzerhitzer HF-Erhitzer und die zu erwärmenden Materialien Produkte.

Die Exposition der zu erwärmenden Materialien findet oft zwischen zwei flächigen Elektroden statt, die in der Art eines Plattenkondensators mit der Hochfrequenzleistungsquelle, dem Generator oder Verstärker, verbunden sind. Das HF-Feld zwischen den Elektroden durchdringt das aufzuwärmende Material und führt im Idealfall zu einer gleichmäßigen und schnellen inneren Wärmeerzeugung im gesamten exponierten Materialvolumen. Bei röhrenförmigen HF-Erhitzern sind die Elektroden beiderseits längs des Erhitzerrohres so angeordnet, dass das HF-Feld das Produkt, das sich durch das Rohr bewegt, durchdingend erwärmt. Das Rohrmaterial muss daher für das HF-Feld durchlässig sein. Die dem Material zugeführte Wärmemenge hängt von der elektrischen Leitfähigkeit bzw. dem dielektrischen Verlustfaktor des Materials, der Stärke des elektrischen Feldes im Rohr und der Expositionszeit ab.

Mit diesem Erhitzerprinzip ist eine sehr schnelle Erwärmung von Produkten möglich, die mit anderen Erhitzungsapparaten nur schwierig oder nur langsam erwärmt werden können. Dies betrifft vor allem hochviskose Produkte, Produkte mit großen suspendierten Partikeln oder Produkte, die zum Anlegen bzw. Anbrennen an heißen Wärmetauscherflächen neigen. Röhrenförmige HF-Erhitzer zeichnen sich durch einen kompakter Aufbau, geringen Druckabfall und geringe Scherbelastung im strömenden Produkt aus. Bei der Lebensmittelproduktion können sie vorteilhaft zur Pasteurisierung oder Sterilisierung fließfähiger Lebensmittel vor der aseptischen oder keimarmen Abfüllung in Behälter eingesetzt werden.

In Versuchen der Erfinder mit einer speziellen Ausführung des röhrenförmigen HF-Erhitzers zeigte sich jedoch, dass einige Produkte beim Durchlauf durch das HF-Erhitzerrohr nicht gleichmäßig aufgeheizt werden. Es entsteht in vielen Fällen ein ausgeprägtes Temperaturprofil am Austritt des Erhitzerrohres anstatt der angestrebten gleichmäßigen Temperaturverteilung. Die Profile weisen eine höhere Temperatur an der Rohrwand und eine niedrigere Temperatur nahe der Rohrachse auf. Besonders bei Lebensmitteln ist dies unerwünscht, weil die thermische Behandlung aus mikrobiologischen Gründen an dem Flüssigkeitsvolumen ausgerichtet werden muss, das am wenigsten erwärmt wurde. Eine ungleichmäßige Erwärmung bringt daher eine thermische Überbeanspruchung großer Anteile des Produktes mit sich, wie sie bereits aus konventionellen Röhrenwärmetauschern bekannt ist. Die thermische Überbeanspruchung führt zu Qualitätsproblemen und sollte durch die schnelle HF-Erwärmung gerade vermieden werden.

Eine naheliegende Möglichkeit zur Vermeidung dieser Problematik besteht in einer Vergleichmäßigung der Temperaturprofile am Austritt des Erhitzerrohrs durch Mischung des Produktes im Rohr, wie dies beispielsweise in der US 2006/0151533 A1 erfolgt. Durch hohen Eintrag mechanischer Energie in die Rohrströmung wird eine intensive Vermischung des Produkts bewirkt und damit eine gleichmäßige Mischtemperatur zwischen Produktteilen mit unterschiedlicher Erwärmung hergestellt. Dies kann prinzipiell durch statische Mischer, rotierende Mischer und die Erzeugung von Strömungsturbulenzen durch hohe Strömungsgeschwindigkeit und/oder große Rohrdurchmesser erreicht werden.

Alle diese Ausgestaltungen sind jedoch mit starker innerer Reibung in den Produkten und mit hoher mechanischer Beanspruchung der Produkte durch Scherkräfte verbunden. Vor allem bei scherempfindlichen Flüssigkeiten und Flüssigkeiten, die fragile Partikel oder Stücke enthalten, sollten aber hohe Scherkräfte vermieden werden. Die Erzeugung von Strömungsturbulenzen erfordert außerdem hohe Produktvolumenströme, die ihrerseits hohe Intensitäten der HF-Felder für eine ausreichende Produkterwärmung erfordern.

Durch einen Einbau von geeigneten Mischelementen in das Rohr wird ferner der offene Rohrquerschnitt stark eingeengt und die Passage von größeren Partikeln in Partikelsuspensionen erschwert.

### Darstellung der Erfindung

Die Aufgabe der Erfindung besteht darin, ein Verfahren anzugeben, mit dem die Erwärmung von Produkten beim Durchlauf durch einen röhrenförmigen HF-Erhitzer vergleichmäßigt, Temperaturprofile im Rohrquerschnitt ausgeglichen und Überhitzungen von Produktanteilen vermeiden werden können, ohne die Nachteile der oben angeführten Mischverfahren in Kauf nehmen zu müssen. Weiterhin soll eine Vorrichtung zur Durchführung des Verfahrens angegeben werden.

Die Aufgabe wird mit dem Verfahren und der Vorrichtung gemäß den Patentansprüchen 1 und 8 gelöst. Vorteilhafte Ausgestaltungen des Verfahrens und der Vorrichtung sind Gegenstand der abhängigen Patentansprüche oder lassen sich der nachfolgenden Beschreibung sowie den Ausführungsbeispielen entnehmen.

Bei dem vorgeschlagenen Verfahren wird das Fluid bzw. Produkt, das vorzugsweise zumindest annähernd laminar durch das Rohr strömt, über einen Rohrabschnitt einem hochfrequenten elektrischen Feld ausgesetzt, durch das sich das Fluid erwärmt. Das Verfahren zeichnet sich dadurch aus, dass in dem Rohrabschnitt ein Unterschied in der Strömungsgeschwindigkeit des Fluids zwischen inneren und äußeren Bereichen des Strömungsquerschnitts durch selektiven Eintrag von Schubenergie in den äußeren Bereichen verringert wird. Der Eintrag der mechanischen Energie findet in Strömungsrichtung statt. Durch den Eintrag der Schubenergie an der Rohrwand wird die wandnahe Produktströmung beschleunigt.

Bei dem Verfahren wird somit die Vergleichmäßigung des Temperaturprofils durch einen selektiven und vergleichsweise geringen Eintrag von Schubenergie in die Produktströmung nahe der Wand des Erhitzerrohrs erreicht. Dabei zeigt sich, dass eine aufwändige Mischung der gesamten Strömung gar nicht notwendig ist, sondern dass bereits ein geringer Eintrag von mechanischer Energie an bzw. im Bereich der Rohrwand ausreicht, um die Temperaturprofile zu verbessern und Temperaturunterschiede zwischen wandnahen und achsnahen Strömungsbereichen deutlich zu verringern.

In einer bevorzugten Ausgestaltung des erfindungsgemäßen Verfahrens erfolgt der örtlich selektive Eintrag von Schubenergie über eine im Rohr rotierende zylindrische Spirale, auch unter dem Begriff Helix bekannt, die sich entlang des Rohrabschnitts erstreckt. Die Spirale rotiert um ihre zentrale Längsachse, die mit der zentralen Rohrachse übereinstimmt. Die Spirale besteht aus einem dielektrischen Material. Mögliche Konstruktionsmaterialien sind Keramiken oder Kunststoffe mit geringem dielektrischem Verlustfaktor.

Eine derartige zylindrische Spirale weist vorteilhafterweise nur Material am Umfang auf, so dass der achsennahe Bereich offen bleibt und frei vom Produkt durchströmt werden kann. Vorteilhafterweise besteht die Spirale aus nur dünnem Material, streift bei der Rotation an der Innenwand des Rohrs und verringert den offenen Rohrquerschnitt nur minimal, vorzugsweise um ≤ 20%. Die rotierende Spirale übt über ihre Steigung eine Schubkraft nur auf den Teil des Produkts aus, der sich nahe der Rohrwand bewegt. Der übrige Teil des Produkts wird von der Spirale nicht direkt beeinflusst.

Vorzugsweise werden Rotationsgeschwindigkeit und Steigung der Spirale so abgestimmt, dass die Schubkraft das wandnahe Fluid auf eine ähnliche axiale Geschwindigkeit bringt, wie sie im übrigen Rohrquerschnitt herrscht. Unter einer ähnlichen axialen Geschwindigkeit wird dabei vorzugsweise eine Geschwindigkeit verstanden, die um ≤ 25% von der Geschwindigkeit auf der zentralen Rohrachse abweicht.

Durch den Betrieb der Spirale wird keine Durchmischung der Flüssigkeit bzw. des Fluids angestrebt. Der Eintrag mechanischer Energie in das strömende Fluid und die Erzeugung von Scherkräften kann daher sehr klein bleiben. Wird für den Bau der Spirale ein ausreichend dünnes Material gewählt, so ist der offene Innendurchmesser der Spirale nur wenig kleiner als der Innendurchmesser des Rohrs. Eine Passage von Partikeln und Stücken, die in der Flüssigkeit bzw. dem Fluid suspendiert sind, wird nicht behindert.

Die vorgeschlagenen Vorrichtung zur Durchführung des Verfahrens weist ein Rohr auf, das zumindest in einem Rohrabschnitt aus einem dielektrischen Material besteht. Im Bereich dieses Rohrabschnittes ist eine Einrichtung zur Beaufschlagung des im Rohr strömenden Fluids mit einem hochfrequenten elektrischen Feld angeordnet. Bei diese Einrichtung kann es sich beispielsweise um beidseitig des Rohrabschnitts angeordnete plattenförmige Elektroden handeln, die mit einem Hochfrequenzgenerator verbunden sind. In dem Rohrabschnitt ist eine zylindrische Spirale aus einem dielektrischen Material angeordnet, die sich entlang des Rohrabschnitts erstreckt und über einen Antrieb zur Rotation antreibbar ist.

Der Antrieb der Spirale erfolgt vorzugsweise an einem ihrer Enden, wobei das andere Ende frei in der Rohrstrecke rotiert. Die Spirale wird dabei in einer Ausgestaltung über eine Welle angetrieben, die mit einem außerhalb des Rohrs angeordneten Motor verbunden ist. In einer anderen Ausgestaltung wird die zylindrische Spirale über eine magnetische Kupplung angetrieben, wobei auch hier der Antriebsmotor außerhalb des Rohrs angeordnet ist.

Der selektive Eintrag von Schubenergie kann beim vorgeschlagenen Verfahren prinzipiell auch mit anderen Mitteln erfolgen, bspw. durch Bewegung einer Folge von Ringen in Strömungsrichtung im Rohr oder durch zusätzliches seitliches Einbringen von Fluid über Düsen an der Rohrwand.

Das Verfahren und die Vorrichtung eignen sich zur gleichmäßigen Erhitzung von flüssigen oder pastösen Produkten, insbesondere von fließfähigen Lebensmittelprodukten für Anwendungen wie sie im einleitenden Teil der Beschreibung in Verbindung mit dem Stand der Technik angegeben sind. Auch der HF-Erhitzer kann so ausgestaltet sein und betrieben werden, wie dies im einleitenden Teil der Beschreibung in Verbindung mit dem Stand der Technik beschrieben ist.

### Kurze Beschreibung der Zeichnungen

Das vorliegende Verfahren und die zugehörige Vorrichtung werden nachfolgend anhand von Ausführungsbeispielen in Verbindung mit den Zeichnungen nochmals kurz erläutert. Hierbei zeigen:
- Fig. 1: ein erstes Beispiel für eine Ausgestaltung der vorgeschlagenen Vorrichtung, und
- Fig. 2: ein zweites Beispiel für eine Ausgestaltung der vorgeschlagenen Vorrichtung.

### Ausführungsbeispiele

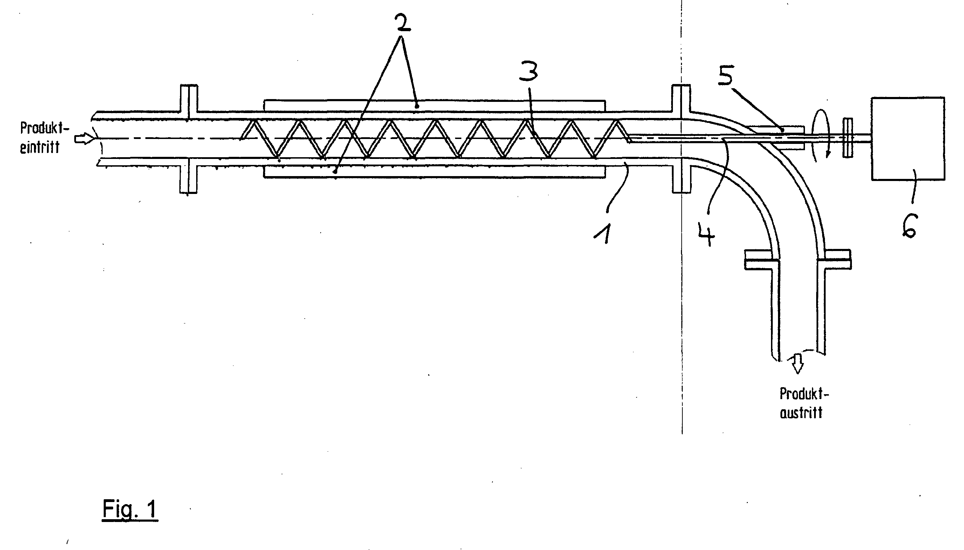

Ein erstes Beispiel für eine Ausgestaltung der vorgeschlagenen Vorrichtung ist in Figur 1 dargestellt. Die Figur zeigt ein Hochfrequenz-Erhitzerrohr 1, das aus einem dielektrischen Material besteht und mit weiteren Rohrabschnitten verbunden ist. An einem Abschnitt des Erhitzerrohrs 1 sind beidseitig plattenförmige Hochfrequenzelektroden 2 angebracht, die mit einem nicht dargestellten Hochfrequenzgenerator verbunden sind. In diesen röhrenförmigen HF-Erhitzer ist eine zylindrische Spirale 3 aus einem dielektrischen Material eingebaut. Die Spirale 3 wird rotierend angetrieben, streift bei der Rotation an der Innenwand des Erhitzerrohrs 1 und verringert den offenen Rohrquerschnitt nur minimal.

Das durch das Rohr strömende Produkt wird in dem Bereich zwischen den Hochfrequenzelektroden durch das HF-Feld erwärmt. Die rotierende Spirale 3 übt über ihre Steigung eine Schubkraft nur auf den Teil des Produkts aus, der sich nahe der Rohrwand bewegt. Der übrige Teil des Produkts wird von der Spirale nicht direkt beeinflusst. Durch diese selektive Beschleunigung der Strömungsgeschwindigkeit des Produkts nahe der Rohrwand verringert sich der Unterschied in der Strömungsgeschwindigkeit zwischen dem inneren achsennahen und dem äußeren wandnahen Bereich des Strömungsquerschnitts. Dies führt zu einer gleichmäßigeren Erwärmung des Produkts im Vergleich zu einer Ausgestaltung ohne Einsatz der Spirale.

Der Antrieb der Spirale erfolgt in dem Beispiel der Figur 1 über eine Welle 4 in der Rohrachse, die durch eine abgedichtete Durchführung 5 aus dem Rohr austritt und von außen mit einem Motor 6 angetrieben wird. Die Welle 4 ist mit einem Ende der Spirale 3 fest verbunden.

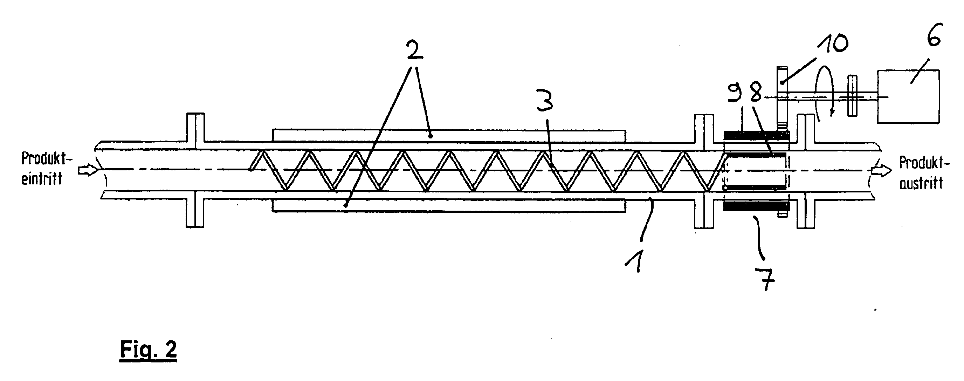

Die Ausgestaltung der Figur 2 unterscheidet sich von der Ausgestaltung der Figur 1 neben dem nun geradlinigen Verlauf des Rohrs lediglich durch den Antrieb der Spirale 3. Dieser Antrieb erfolgt hier über eine magnetische Kupplung, die aus einem magnetischen Ring 8 an der Rohrinnenwand besteht, der mit seiner Achse parallel zur Rohrachse liegt, und mit der Spirale 3 fest verbunden ist. Ein zweiter magnetischer Ring 9, der das Rohr außen in Höhe des magnetischen Rings 8 im Rohrinneren umfasst, wird motorisch in Drehbewegung versetzt und überträgt die Drehbewegung über die magnetische Wechselwirkung auf den inneren Ring 8 und die Spirale 3. Der äußere magnetischer Ring 9 ist hier über einen Zahnradantrieb 10 mit dem Motor 6 verbunden.

### Bezugszeichenliste

- 1: Hochfrequenz-Erhitzerrohr
- 2: Hochfrequenz-Elektroden
- 3: Zylindrische Spirale
- 4: Welle
- 5: Wellendurchführung
- 6: Motor
- 7: Magnetische Kupplung
- 8: Innerer magnetischer Ring
- 9: Äußerer magnetischer Ring
- 10: Zahnradantrieb

## Patentansprüche

1. Verfahren zur gleichmäßigen Erhitzung eines durch ein Rohr (1) strömenden Fluids,
bei dem das Fluid über einen Rohrabschnitt einem hochfrequenten elektrischen Feld ausgesetzt wird,
**dadurch gekennzeichnet,**
**dass** in dem Rohrabschnitt ein Unterschied in der Strömungsgeschwindigkeit des Fluids zwischen inneren und äußeren Bereichen des Strömungsquerschnitts verringert wird, indem in den äußeren Bereichen selektiv Schubenergie in Strömungsrichtung eingetragen wird.

2. Verfahren nach Anspruch 1,
**dadurch gekennzeichnet,**
**dass** der selektive Eintrag von Schubenergie über eine im Rohr (1) rotierende zylindrische Spirale (3) erfolgt, die sich entlang des Rohrabschnitts erstreckt.

3. Verfahren nach Anspruch 2,
**dadurch gekennzeichnet,**
**dass** die zylindrische Spirale (3) über ihren vollen Umfang an einem Innenumfang des Rohrs (1) anliegt.

4. Verfahren nach Anspruch 2 oder 3,
**dadurch gekennzeichnet,**
**dass** Rotationsgeschwindigkeit und Steigung der zylindrischen Spirale (3) so abgestimmt werden, dass die Schubkraft wandnahes Fluid auf eine axiale Strömungsgeschwindigkeit bringt, die um ≤ 25% von der Strömungsgeschwindigkeit auf der zentralen Rohrachse abweicht.

5. Verfahren nach einem der Ansprüche 2 bis 4,
**dadurch gekennzeichnet,**
**dass** die zylindrische Spirale (3) über eine Welle (4) angetrieben wird, die mit einem außerhalb des Rohrs (1) angeordneten Motor (6) verbunden ist.

6. Verfahren nach einem der Ansprüche 2 bis 4,
**dadurch gekennzeichnet,**
**dass** die zylindrische Spirale (3) über eine magnetische Kupplung (7) angetrieben wird.

7. Verfahren nach einem der Ansprüche 1 bis 6 zur gleichmäßigen Erhitzung von flüssigen oder pastösen Produkten, insbesondere von fließfähigen Lebensmittelprodukten.

8. Vorrichtung zur Durchführung des Verfahrens nach einem der Ansprüche 1 bis 7, die
- ein Rohr (1), das zumindest in einem Rohrabschnitt aus einem dielektrischen Material besteht,
- eine im Bereich des Rohrabschnittes angeordnete Einrichtung (2) zur Beaufschlagung eines im Rohr (1) strömenden Fluids mit einem hochfrequenten elektrischen Feld und
- eine in dem Rohrabschnitt angeordnete zylindrische Spirale (3) aus einem dielektrischen Material aufweist, die sich entlang des Rohrabschnitts erstreckt und über einen Antrieb (6) zur Rotation antreibbar ist.

9. Vorrichtung nach Anspruch 8,
**dadurch gekennzeichnet,**
**dass** die zylindrische Spirale (3) über ihren vollen Umfang an einem Innenumfang des Rohrs (1) anliegt.

10. Vorrichtung nach Anspruch 8 oder 9,
**dadurch gekennzeichnet,**
**dass** Rotationsgeschwindigkeit und Steigung der zylindrischen Spirale (3) so abgestimmt sind, dass die Schubkraft wandnahes Fluid auf eine axiale Strömungsgeschwindigkeit bringt, die um ≤ 25% von der Strömungsgeschwindigkeit auf der zentralen Rohrachse abweicht.

11. Vorrichtung nach einem der Ansprüche 8 bis 10,
**dadurch gekennzeichnet,**
**dass** der Antrieb (6) außerhalb des Rohrs (1) angeordnet und die zylindrische Spirale (3) über eine welle (4) mit dem Antrieb (6) verbunden ist.

12. Vorrichtung nach einem der Ansprüche 8 bis 10,
**dadurch gekennzeichnet,**
**dass** der Antrieb (6) außerhalb des Rohrs (1) angeordnet ist und die Spirale (3) über eine magnetische Kupplung (7) antreibt.

## Claims

1. A method for the uniform heating of a fluid flowing through a pipe (1),
wherein the fluid is exposed over a pipe section to a high-frequency electric field,
**characterised in that**,
in the pipe section, a difference in the flow velocity of the fluid between inner and outer regions of the flow cross-section is reduced by inputting shear energy in the flow direction selectively in the outer regions.

2. The method according to claim 1,
**characterised in that**
the selective input of shear energy takes place via a cylindrical spiral (3) rotating in the pipe (1), said spiral extending along the pipe section.

3. The method according to claim 2,
**characterised in that**
the cylindrical spiral (3) lies over its entire circumference against an inner circumference of the pipe (1).

4. The method according to claim 2 or 3,
**characterised in that**
the rotational velocity and pitch of the cylindrical spiral (3) are matched in such a way that the shear force brings fluid close to the wall to an axial flow velocity which diverges by ≤ 25% from the flow velocity on the central pipe axis.

5. The method according to any one of claims 2 to 4,
**characterised in that**
the cylindrical spiral (3) is driven by means of a shaft (4), which is connected to a motor (6) disposed outside the pipe (1).

6. The method according to any one of claims 2 to 4,
**characterised in that**
the cylindrical spiral (3) is driven by means of a magnetic coupling (7).

7. The method according to any one of claims 1 to 6 for the uniform heating of liquid or pasty products, in particular of free-flowing food products.

8. A device for performing the method according to any one of claims 1 to 7, which comprises
- a pipe (1), which at least in one pipe section is made of a dielectric material,
- a device (2) for applying a high-frequency electric field to a fluid flowing in the pipe (1), the device being disposed in the region of the pipe section, and
- a cylindrical spiral (3) made of a dielectric material disposed in the pipe section, said cylindrical spiral extending along the pipe section and being able to be driven for rotation by a drive (6).

9. The device according to claim 8,
**characterised in that**
the cylindrical spiral (3) lies over its entire circumference against an inner circumference of the pipe (1).

10. The device according to claim 8 or 9,
**characterised in that**
the rotational velocity and pitch of the cylindrical spiral (3) are matched in such a way that the shear force brings fluid close to the wall to an axial flow velocity which diverges by ≤ 25% from the flow velocity on the central pipe axis.

11. The device according to any one of claims 8 to 10,
**characterised in that**
the drive (6) is disposed outside the pipe (1) and the cylindrical spiral (3) is connected by means of a shaft (4) to the drive (6).

12. The device according to any one of claims 8 to 10,
**characterised in that**
the drive (6) is disposed outside the pipe (1) and the spiral (3) is driven by means of a magnetic coupling (7).

## Revendications

1. Procédé pour le chauffage uniforme d'un fluide s'écoulant à travers un tuyau (1),
dans lequel le fluide est soumis à un champ électrique haute fréquence via un tronçon de tuyau,
**caractérisé en ce qu'**
une différence de vitesse d'écoulement du fluide entre des zones intérieure et extérieure de la section d'écoulement est réduite dans la section de tuyau, **en ce que** dans les zones extérieures, de l'énergie de poussée est apportée de façon sélective dans le sens d'écoulement.

2. Procédé selon la revendication 1,
**caractérisé en ce que**
l'apport sélectif d'énergie de poussée s'effectue via une spirale cylindrique (3) tournant dans le tuyau (1) qui s'étend le long du tronçon de tuyau.

3. Procédé selon la revendication 2,
**caractérisé en ce que**
la spirale cylindrique (3) repose par son pourtour complet sur un pourtour intérieur du tuyau (1).

4. Procédé selon la revendication 2 ou 3,
**caractérisé en ce que**
la vitesse de rotation et l'inclinaison de la spirale cylindrique (3) sont ainsi déterminées que la force de poussée apporte du fluide proche de la paroi à une vitesse d'écoulement axial qui s'écarte de ≤ 25% de la vitesse d'écoulement sur l'axe central de tuyau.

5. Procédé selon l'une des revendications 2 à 4,
**caractérisé en ce que**
la spirale cylindrique (3) est entraînée par un arbre (4) qui est relié à un moteur (6) disposé en-dehors du tuyau (1).

6. Procédé selon l'une des revendications 2 à 4,
**caractérisé en ce que**
la spirale cylindrique (3) est entraînée via un couplage magnétique (7).

7. Procédé selon l'une des revendications 1 à 6, pour le chauffage uniforme de produits liquides ou pâteux, en particulier de produits alimentaires pouvant couler.

8. Dispositif destiné à l'exécution du procédé selon l'une des revendications 1 à 7, qui présente
- un tuyau (1) qui est fait dans un matériau diélectrique au moins dans un tronçon de tuyau,
- un dispositif (2) disposé au niveau du tronçon de tuyau pour alimenter un fluide s'écoulant dans le tuyau (1) avec un champ électrique haute fréquence et
- une spirale cylindrique (3) en matériau diélectrique disposée dans le tronçon de tuyau, qui s'étend le long du tronçon cylindrique et peut être entraînée pour tourner via un entraînement (6).

9. Dispositif selon la revendication 8,
**caractérisé en ce que**
la spirale cylindrique (3) repose par son pourtour complet sur un pourtour intérieur du tuyau (1).

10. Dispositif selon la revendication 8 ou 9,
**caractérisé en ce que**
la vitesse de rotation et l'inclinaison de la spirale cylindrique (3) sont ainsi déterminées que la force de poussée apporte du fluide proche de la paroi à une vitesse d'écoulement axial qui s'écarte de ≤ 25% de la vitesse d'écoulement sur l'axe central de tuyau.

11. Dispositif selon l'une des revendications 8 à 10,
**caractérisé en ce que**
l'entraînement (6) est disposé en-dehors du tuyau (1) et la spirale cylindrique (3) est reliée à l'entraînement (6) par un arbre (4).

12. Dispositif selon l'une des revendications 8 à 10,
**caractérisé en ce que**
l'entraînement (6) est disposé en-dehors du tuyau (1) et entraîne la spirale cylindrique (3) par un couplage magnétique (7).
